(19) Europäisches Patentamt / European Patent Office / Office européen des brevets

(11) **EP 3 315 471 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(51) Int Cl.:
**C04B 5/00** *(2006.01)*          **C04B 18/14** *(2006.01)*

(21) Anmeldenummer: **16196654.4**

(22) Anmeldetag: **31.10.2016**

(54) **VERFAHREN ZUM AUFBEREITEN UND AKTIVIEREN VON STAHLWERKSCHLACKEN**

METHOD FOR THE TREATMENT AND ACTIVATION OF STEELMILL SLAGS

PROCÉDÉ DE TRAITEMENT ET D'ACTIVATION DE SCORIES D'ACIÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2018   Patentblatt 2018/18**

(73) Patentinhaber: **Loesche GmbH**
**40549 Düsseldorf (DE)**

(72) Erfinder: **WULFERT, Holger**
**40549 Düsseldorf (DE)**

(74) Vertreter: **Wunderlich & Heim Patentanwälte**
**Partnerschaftsgesellschaft mbB**
**Irmgardstrasse 3**
**81479 München (DE)**

(56) Entgegenhaltungen:
**EP-A1- 2 843 063          WO-A1-94/17006**
**WO-A1-2014/037020**

**Beschreibung**

Die Erfindung betrifft ein Verfahren zum Aufbereiten und Aktivieren von Stahlwerkschlacken, bevorzugt von LD-Schlacken, als hydraulischer Kompositstoff für die Zementindustrie.

Unter Stahlwerkschlacken können im Sinne der Erfindung LD-Schlacken sowie beispielsweise Elektroofenschlacken (EOS) angesehen werden.

WO 2014/037020 A1 betrifft ein Verfahren zur Aufbereitung von Stahlwerkschlacken als hydraulischer Kompositstoff für die Zementindustrie. Dieses Dokument beschreibt kein Abkühlen einer Stahlwerksschlacke sondern das Abkühlen eines Produkts aus einer Stahlwerksschlacke. Die Zerkleinerung erfolgt nur bis 4000 Blaine. Ein Abkühldauer ist nicht angegeben. EP 2 843 063 A1 beschreibt ebenfalls die Aufbereitung von Stahlwerkschlacken. Die Schmelze wird in höchstens 15 Minuten abgekühlt und eine Aufmahlung wird nicht beschrieben.

Bei der Stahlerzeugung fallen neben Hochofenschlacken aus der Roheisenherstellung unter anderem Stahlwerkschlacken an, welche auch als LD-Schlacken bezeichnet werden, da sie aus der Schmelze nach dem Linz-Donawitz-Verfahren entstehen. Sie werden ebenfalls als BOF-Schlacken (Basic Oxygen Furnace) bezeichnet. LD-Schlacken weisen einen Gehalt an Klinkerphasen auf, der grundsätzlich auch für eine Verwendung als Kompositmaterial beziehungsweise Kompositstoff in Kompositzementen in Frage kommen könnte. Beispielsweise sind zwischen 3 M.-% und 8 M.-% Alit ($C_3S$, Tricalciumsilikat) und zwischen 10 M.-% und 28 M.-% Belit ($C_2S$, Dicalciumsilikat) sowie eine amorphe Glasphase von 5 M.-% bis 40 M.-% vorhanden. Jedoch ist es noch nicht gelungen, LD-Schlacken derart aufzubereiten, dass die hydraulischen Eigenschaften der vorhandenen Klinker- und Glasphasen verwendet werden können. Aus diesem Grund werden LD-Schlacken anders als Hüttensande gegenwärtig nicht als Kompositstoff für Zement sondern lediglich als Füller im Straßenbau und in geringem Maße auch als Dünger eingesetzt. Abhängig von weiteren Zusatzkomponenten ist es jedoch aufgrund neuerer Bestimmungen nicht mehr möglich, diese Verwendung weiterzuführen, was zu einer zunehmenden Deponierung der LD-Schlacken führt. Allerdings stellt sich die Deponierung aufgrund aktueller EU-Umweltregulierungen als problematisch dar, da bereits teilweise auch eine Deponierung nicht mehr erfolgen darf.

Grundsätzlich wäre es daher wünschenswert, die in LD-Schlacke vorhandenen Klinkerphasen Alit und Belit in einer Weise aufarbeiten zu können, sodass das somit entstehende Produkt als Kompositstoff für die Zementindustrie verwendet werden kann. Allerdings ist dies nach der gängigen Lehrbuchmeinung nicht möglich. So zeigen Versuche, dass eine in einer Labor-Kugelmühle auf 3.000 Blaine aufgemahlene LD-Schlacke sich beim Einsatz als Kompositstoff in Zementen nahezu inert verhält. Dies wird nach der gängigen Auffassung aufgrund der Temperaturgenese der Belitphase vermutet, die zu einer nicht-reagierenden Belitmodifikation führen soll.

Seitens der Anmelderin wurde in der zum Anmeldezeitpunkt dieser Anmeldung nicht veröffentlichten PCT-Anmeldung (PCT/EP2015/066348) erkannt, dass es bei einer höchstfeinen Zerkleinerung von LD-Schlacke, beispielsweise auf ca. 11.000 Blaine möglich wird, das hydraulische Potenzial der LD-Schlacke zu mobilisieren, indem mindestens einer Kristallfläche von vorhandenen hydraulisch aktiven Komponenten, wie beispielsweise Belit, freigelegt wird.

Jedoch erfordert eine derart feine Mahlung einen sehr hohen Energieaufwand, so dass es aus wirtschaftlichen Gesichtspunkten wünschenswert ist, ein Verfahren zu entwickeln, um Stahlwerkschlacken, insbesondere LD-Schlacken, als hydraulischen Kompositstoff für die Zementindustrie unter Einsatz eines geringeren Energieaufwandes verwenden zu können.

Der Erfindung liegt daher die **Aufgabe** zugrunde, ein Verfahren zum Aufbereiten und Aktivieren von Stahlwerkschlacken als hydraulischer Kompositstoff für die Zementindustrie anzugeben, welches energieeffizient durchgeführt werden kann.

Diese Aufgabe wird erfindungsgemäß durch ein Verfahren zum Aufbereiten und Aktivieren von Stahlwerksschlacken, vorzugsweise von LD-Schlacken, als hydraulischer Kompositstoff für die Zementindustrie mit den Merkmalen des Anspruchs 1 gelöst.

Vorteilhafte Ausführungsformen der Erfindung sind in den Unteransprüchen und der Beschreibung sowie den Figuren und deren Erläuterungen angegeben.

Bei dem erfindungsgemäßen Verfahren ist vorgesehen, dass flüssige Stahlwerksschlacken abgekühlt werden, wobei sie frühestens nach vier Stunden zum Erstarren gebracht werden, wodurch in den erstarrten Stahlwerksschlacken mindestens 30 M.-% mineralische kristalline Belitphase vorhanden ist. Anschließend werden die erstarrten Stahlwerksschlacken auf eine Feinheit von zwischen 5.500 Blaine bis 7.000 Blaine zerkleinert, wobei die Kristalle der Belitphase von sie umgebenden nicht-reaktiven Phasen freigelegt werden. Abschließend werden die so zerkleinerten Stahlwerksschlacken einer Verwendung als hydraulischer Kompositstoff für die Zementindustrie zugeführt.

Der Erfindung liegen mehrere in Kombination wirkende Grundgedanken und Erkenntnisse zugrunde. Basierend auf den oben angesprochenen Erkenntnissen, dass es möglich ist, das vorhandene Belit zu aktivieren, wurde zuerst vermutet, dass je feiner Stahlwerksschlacken, insbesondere LD-Schlacken, zerkleinert, beispielsweise aufgemahlen, werden, umso größer deren hydraulisches Erhärtungspotenzial wird und sie so besser als Kompositstoff für die Zementindustrie verwendet werden können.

Diese Vermutung beruht darauf, dass man erkannt hat, dass beim feinen Aufmahlen vorhandene Belitkristalle, die normalerweise in Stahlwerksschlacken beziehungsweise LD-Schlacken von nicht-reaktiven Phasen umgeben sind, von diesen nicht-reaktiven Phasen freigelegt werden, so dass die Belitkristalle bei einer Verwendung als ZementKompositstoff mit Wasser reagieren können.

Es zeigte sich aber, dass ab einer Aufmahlung von LD-Schlacken auf über 11.000 Blaine keine erhöhte Reaktivität mehr zu erreichen ist. Um dieses Ergebnis genauer zu verstehen, wurden detailliertere Analysen der erstarrten Stahlwerksschlacken am Beispiel von LD-Schlacken durchgeführt. Wie bereits in der Einleitung ausgeführt, nahm man herkömmlicherweise an, dass LD-Schlacken eine mineralische Zusammensetzung von ca. 25% M.-% Alit- und Belitphasen sowie zwischen 5 M.-% bis 40 M.-% röntgenamorphe Phasen nach Rietveld aufweisen. Mittels detaillierter rasterelektronenmikroskopischer Untersuchungen wurde bei der Analyse der röntgenamorphen Phase erkannt, dass es sich hierbei nicht wie allgemein vermutet, um eine Glasphase sondern um äußerst kleines kryptokristallines Belit handelt, welches in der Röntgendiffaktometrie nicht als eigenständige Phase detektiert werden kann. Hieraus folgt die weitere Erkenntnis, dass bei LD-Schlacken auch aus unterschiedlichen Stahlwerken die Summe aus der Belitphase und der röntgenamorphen Phase nach Rietveld jeweils in M.-% im Wesentlichen gleich ist.

Zunächst folgte man der gängigen Zementlehre mit der Annahme, dass der kryptokristalline Anteil den reaktiven Part eines Kompositstoffes darstellt. Dies konnte jedoch in Versuchsreihen nicht nachgewiesen werden. Eine weitere Analyse ergab, dass wie zuvor bereits in Bezug auf die Belitkristalle erkannt, auch die kryptokristallinen Phasen von nicht-reaktiven Phasen, beispielsweise eisenhaltigen Mineralphasen, ab- und eingeschlossen sind.

Auch bei einer Aufmahlung auf über 11.000 Blaine war es nicht möglich, diese Umhüllung der kryptokristallinen Kristalle zu entfernen, so dass es unter wirtschaftlichen Gesichtspunkten nicht möglich war, diese Phase zu aktivieren.

Basierend auf diesen Erkenntnissen wurde entsprechend der Erfindung weiter gefolgert, dass es für eine wirtschaftliche Verwertung von Stahlwerksschlacken notwendig ist, den Anteil an röntgenamorphen Phasen nach Rietveld beziehungsweise des kryptokristallinen Belit zu minimieren und dass dies aufgrund der konstanten Summe aus Belit und kryptokristallinen Belit vermutlich zu einer Verschiebung der M.-% in die Belitphase führen wird.

Daher schlägt die Erfindung vor, flüssige Stahlwerksschlacken langsam abzukühlen. Es hat sich herausgestellt, dass es bereits ausreicht, Stahlwerksschlacken derart abzukühlen, dass sie frühestens nach 4 Stunden zum Erstarren gebracht werden. Teilweise können noch bessere Ergebnisse erreicht werden, wenn das Erstarren erst nach 5, 6, 7, 8, 9, 10, 11, 12, 18, 24 oder 48 Stunden geschieht.

Derartig abgekühlte Stahlwerksschlacken, insbesondere LD-Schlacken, weisen einen unverhältnismäßig hohen Anteil an kristallinem Belit auf, der bei einer moderaten Feinheit von bereits zwischen 5.500 Blaine und 7.000 Blaine freigelegt und aktiviert werden kann.

Zusammenfassend ist es daher durch eine gezielte langsame Abkühlung möglich, in Stahlwerksschlacken, insbesondere LD-Schlacken, den Anteil an der kristallinen Belitphase zu erhöhen und den Anteil der röntgenamorphen Phase beziehungsweise des kryptokristallinen Belits zu verringern. Dies hat zur Folge, dass mit einem vertretbaren Zerkleinerungs- beziehungsweise Mahlaufwand das Belit freigelegt und damit aktiviert werden kann und somit einer Verwendung als hydraulischer Kompositstoff für die Zementindustrie zugeführt werden kann.

Bevorzugt ist es, wenn die erstarrten Stahlwerksschlacken, insbesondere LD-Schlacke, weniger als 20 M.-% röntgenamorphe Anteile nach Rietveld aufweisen. Bei den röntgenamorphen Anteilen handelt es sich insbesondere um kryptokristallines Belit. Wie bereits beschrieben, besteht ein Zusammenhang zwischen dem normalen Belitanteil in Stahlwerksschlacken und dem als röntgenamorphe Phase detektierten kryptokristallinen Belit. Je geringer der Anteil dieses kryptokristallinen Belits in den erstarrten Stahlwerksschlacken, zum Beispiel LD-Schlacke, ist, umso höher ist der Anteil an kristalliner Belitphase jeweils in M.-%. Dies bedeutet, dass bevorzugterweise die flüssigen Stahlwerksschlacken, beziehungsweise die LD-Schlacken, derart abgekühlt werden, dass der kryptokristalline Belitanteil sich minimiert und der Belitanteil sich also erhöht, so dass das Erhärtungspotenzial der erstarrten Stahlwerksschlacken nach dem Aufmahlen maximiert werden kann.

Bei weiteren Analysen hat sich herausgestellt, dass die flüssigen Stahlwerksschlacken, insbesondere die LD-Schlacken, vorzugsweise einen Kalkstandard II zwischen 50 und 80 aufweisen. In diesem Zusammenhang wird von einem Kalkstandard II (Kst II), der wie folgt definiert ist, ausgegangen:

$$KSt\ II = \frac{100 \cdot CaO}{2,80 \cdot SiO_2 + 1,8 \cdot Al_2O_3 + 0,65 \cdot Fe_2O_3}$$

Es hat sich herausgestellt, dass sofern die flüssigen Stahlwerksschlacken beziehungsweise LD-Schlacken eine Zusammensetzung aufweisen, welche den geforderten Kalkstandard hat, ein Ausbilden der Belitphase unterstützt wird, beziehungsweise erst möglich ist. Da wie beschrieben, es eine Intention der Erfindung ist, die Belitphase zu maximieren, kann dies auch durch das Einstellen, beispielsweise Dotieren des gewünschten Kalkstandards beeinflusst werden.

Grundsätzlich können die flüssigen Stahlwerksschlacken, insbesondere die LD-Schlacken, vor dem Abkühlen und Erstarren eine Temperatur zwischen 1600°C bis 1700°C, bevorzugt zwischen 1620°C und 1650°C, aufweisen. Ein Erstarren der flüssigen Stahlwerksschlacken tritt bei einer Temperatur zwischen 1400°C und 1450°C auf. Es hat sich herausgestellt, dass insbesondere die Temperaturbereiche für flüssige Stahlwerksschlacken einen guten Kompromiss zwischen den Anforderungen an das Material der Gefäße, beispielsweise den Ofen oder der Pfanne, in denen die flüssigen Stahlwerksschlacken behandelt und/oder transportiert werden, und einer großen Belitausbildung haben, da dieser Temperaturbereich keinen oder kaum Einfluss auf die Belitausbildung in der erstarrten Schlacke hat. Auch ist eine möglichst geringe Temperatur für das Bedienpersonal wünschenswert, da hierdurch weniger Aufwand für Temperaturschutz notwendig wird.

Grundsätzlich ist es möglich, dass die gemahlenen Stahlwerksschlacken, insbesondere LD-Schlacken, der Verwendung als hydraulischer Kompositstoff für die Zementindustrie direkt nach dem Zerkleinern, insbesondere dem Mahlen, ohne eine weitere Sichtung zugeführt werden. Die aufbereiteten und zerkleinerten, insbesondere gemahlenen, Stahlwerksschlacken weisen genügend gewünschte Eigenschaften auf, um sie direkt als hydraulische Kompositstoffe für die Zementindustrie zu verwenden.

Um jedoch einen noch höherwertigen Kompositstoff zu erzeugen, ist es auch möglich, dass aus den gemahlenen Stahlwerksschlacken vor der Verwendung als hydraulischer Kompositstoff für die Zementindustrie Feinstkorn mit einer Feinheit von mehr als 8.500 Blaine abgetrennt wird.

Zunächst einmal ist zu erläutern, dass beim Zerkleinern, insbesondere dem Mahlen von Mahlgut, eine Verteilung der Feinheit im gemahlenen Mahlgut vorliegt. Hierbei handelt es sich um eine Verteilung, je nach Mühle, die mit einer Gaußverteilung vergleichbar ist. Daher liegen auch bei einer gewünschten Feinheit zwischen 5.500 Blaine und 7.000 Blaine Materialien vor, die eine Feinheit über diesem Bereich, beispielsweise über 8.500 Blaine, aufweisen. Hierbei wurde erkannt, dass diese äußerst feinen Anteile zumeist gerade das kryptokristalline Belit sind, welches als nicht-aktivierbar anzusehen ist. Wird dieses kryptokristalline Belit, welches beispielsweise 20 M.-% oder weniger M.-% ausmachen kann, abgetrennt, so kann die Reaktivität der gemahlenen Stahlwerksschlacke beziehungsweise LD-Schlacke noch weiter in Bezug auf die Gesamtmasse erhöht werden.

Die Erfindung ist nicht eingeschränkt auf bestimmte Abkühlmethoden für flüssige Stahlwerksschlacken, so lange das geforderte langsame Erstarren erreicht wird. Eine vorteilhafte Methode zum definierten Abkühlen ist beispielsweise, die flüssigen Stahlwerksschlacken oder LD-Schlacke in Beeten mit einer Schichtdicke von mindestens 90 cm auszubringen und dort ohne zusätzliche aktive Abkühlmittel abzukühlen zu lassen. Selbstverständlich können auch, sofern die oben angesprochenen Zeiten zumindest für den Kernbereich der zu erstarrenden Stahlwerksschlacken eingehalten sind, aktive Abkühlhilfen, beispielsweise eine Wasseraufdüsung, für die Oberfläche eingesetzt werden.

Zum Zerkleinern der erstarrten Stahlwerksschlacken beziehungsweise LD-Schlacke wird vorteilhafterweise eine Mühle-Sichter-Kombination verwendet. Hierbei kann es sich beispielsweise um eine Mühle-Sichter-Kombination mit einer Vertikalwälzmühle, insbesondere des LOESCHE-Typs, handeln. Mühle-Sichter-Kombinationen weisen eine gute Energieeffizienz für die notwendige feine Zerkleinerung von mindestens 5.500 Blaine auf. Die Verwendung von Vertikalwälzmühlen, insbesondere des LOESCHE-Typs, hat sich als vorteilhaft erwiesen, da neben der Zerkleinerung auch Scherkräfte auf das Mahlgut einwirken und so in den Belitkristallen zum Teil Mikrorisse erzeugt werden, die bei der späteren Reaktion mit Wasser diese Reaktion positiv beeinflussen.

Die Erfindung wird nachfolgend unter Bezugnahme auf die anliegenden Figuren näher erläutert. Hierbei zeigen:

Fig. 1    eine erste rasterelektronenmikroskopische Aufnahme einer LD-Schlacke mit abgeschirmten für Wasser nicht zugänglichen Belit

Fig. 2    eine zweite rasterelektronenmikroskopische Aufnahme einer LD-Schlacke mit Belit und kryptokristallinen (röntgenamorphen) Belit

Fig. 3    eine erste rasterelektronenmikroskopische Aufnahme einer gemahlenen LD-Schlacke mit freigelegten Belit

Fig. 4    eine zweite rasterelektronenmikroskopische Aufnahme einer gemahlenen LD-Schlacke mit auch nach der Mahlung abgeschirmten kryptokristallinen Belit

Fig. 5    eine dritte rasterelektronenmikroskopische Aufnahme einer gemahlenen LD-Schlacke mit freigelegtem Belit und Rissinduktion infolge der Mahltechnologie (Vertikalwälzmühle)

In der nachfolgenden Tabelle ist die durchschnittliche Zusammensetzung der Hauptkomponenten von LD-Schlacken mittels RFA in M.-% angegeben. Hieraus ergibt sich ein durchschnittlicher Kalkstandard II von ca. 73,1.

Tabelle 1

| | LD-Schlacke (durchschnittliche Zusammensetzung) |
|---|---|
| $SiO_2$ | 11,8 |
| $Al_2O_3$ | 2,8 |
| $Fe_2O_3$ | 31,8 |
| CaO | 41,7 |
| MgO | 4,9 |
| MnO | 3,2 |
| $P_2O_5$ | 1,5 |
| KSt II | 73,1 |

Demgegenüber ist in Tabelle 2 die mineralische Phasenzusammensetzung bezüglich der Hauptkomponenten nach Rietveld in M.-% zum einen für durchschnittliche LD-Schlacken und zum anderen für eine entsprechend der Erfindung abgekühlte LD-Schlacke angeführt.

Tabelle 2

| | LD-Schlacke (durchschnittliche Zusammensetzung) | erfindungsgemäße LD-Schlacke |
|---|---|---|
| Alit - $C_3S$ | 2,5 | 2,9 |
| Belit-$C_2S$ | 16,4 | 35,9 |
| Brownmillerit-$C_4AF$ | 2,5 | 3,5 |
| Wüstit-Mg-Ca-Mn-Fe-Oxid | 8,6 | 13,1 |
| Magnetit-$Fe_3O_4$ | 3,4 | 1,5 |
| Srebrodolskit - $Ca_2Fe_2O_5$ | 17,5 | 24,6 |
| Freikalk - CaO | 3,9 | 9,3 |
| Portlandit - $Ca(OH)_2$ | 4,5 | 0,3 |
| Calcit - $CaCO_3$ | 1,9 | 1,0 |
| Röntgenamorphe Phase | 39,5 | 7,9 |

Entsprechend der Erfindung ist vorgesehen, dass die flüssige LD-Schlacke derart abgekühlt wird, dass sie frühestens nach 4 Stunden erstarrt. Dies hat, wie aus Tabelle 2 zu ersehen, neben anderen Effekten auch den Effekt, dass sich der Anteil der als röntgenamorph detektierten Phase deutlich verringert, wohingegen sich der Anteil an Belit deutlich erhöht. Die weiteren Unterschiede in weiteren Phasen beruhen zum Teil darauf, dass hier eine durchschnittliche LD-Schlackenzusammensetzung gegenüber einem konkret erhaltenen Produkt, nämlich der erfindungsgemäßen LD-Schlacke angegeben ist.

Dies hat zur Folge, wie entsprechend der Erfindung erkannt wurde, dass der wenig reaktive röntgenamorphe Anteil reduziert wird, wohingegen der als aktiv anzusehende Anteil an Belit erhöht wird. Da dies bereits durch ein geeignetes Kühlregime erreicht wird, bedeutet dies, dass ohne zusätzliches Einbringen von Energie, beispielsweise durch besonders feines Aufmahlen, das Erhärtungspotential der LD-Schlacke für die Zementindustrie deutlich erhöht werden kann. Allerdings muss entsprechend der Erfindung auch berücksichtigt werden, dass nicht allein ein entsprechendes Abkühlregime ausreicht, um aus bisher für die Zementindustrie nicht als relevant angesehenen LD-Schlacken einen hochwertigen Kompositstoff herzustellen.

Hierfür ist es entsprechend der Erfindung zusätzlich zwingend erforderlich, dass die LD-Schlacke entsprechend zerkleinert wird. Bevorzugt wird das mittels einer Mahlung auf einen Bereich zwischen 5.500 Blaine und 7.000 Blaine durchgeführt. Die Zerkleinerung kann vorteilhafterweise auch in Richtung von 6.000 bis 6.500 Blaine vorgesehen sein.

Im Rahmen der Erfindung hat es sich als vorteilhaft herausgestellt, diese Zerkleinerung mittels Wälzmühlen, insbesondere Vertikalwälzmühlen, durchzuführen. Besonders geeignet hierzu hat sich der LOESCHE-Typ einer Vertikalwälzmühle herausgestellt, da er neben einer Zerkleinerung auch noch zusätzliche Kräfte, insbesondere Scherkräfte, auf das Mahlgut einbringt, welche sich im Folgenden positiv auf das Endprodukt auswirken.

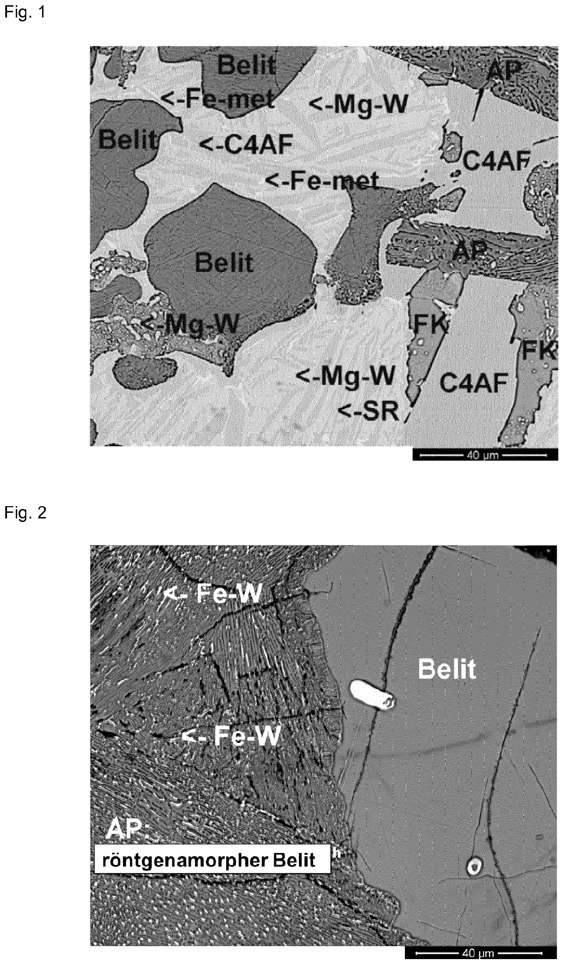

In Fig. 1 ist eine erste rasterelektronenmikroskopische Aufnahme einer LD-Schlacke dargestellt, welche nicht entsprechend dem erfindungsgemäßen Verfahren abgekühlt wurde. Dies bedeutet, dass diese Schlacke, wie oft üblich, beispielsweise durch intensive Wasserzugabe aktiv gekühlt wurde.

In der Figur stehen die verwendeten Abkürzungen für Magnesiumwüstit (Mg-W), Brownmillerit ($C_4AF$), Freikalk (FK), röntgenamorphe Phase (AP), Eisenwüstit (Fe-W), metallisches Eisen (Fe-met) sowie Srebrodolskit (SR).

Zum einen bestätigt diese rasterelektronenmikroskopische Aufnahme die Phasenzusammensetzung, welche nach Rietveld ermittelt wurde. Zum anderen ist zu erkennen, dass das als reaktiv vermutete Belit von Magnesiumwüstit sowie Srebrodolskit umgeben ist. Diese Phasen sind als nicht-reaktiv bekannt. Anders ausgedrückt wird die reaktive Belitphase durch nicht-reaktive, insbesondere eisenhaltige, Phasen, abgeschirmt, so dass es nicht zu einem Wasserzutritt und somit zu keiner Hydration kommen kann.

In Fig. 2 ist in einer ähnlichen Auflösung wie in Fig. 1 ebenfalls eine rasterelektronenmikroskopische Aufnahme von herkömmlicher LD-Schlacke dargestellt. Hierauf ist erkennbar, dass es sich entgegen der gängigen Lehrmeinung bei der nach Rietveld detektierten röntgenamorphen Phase nicht um eine Glasphase, sondern um kryptokristallines Belit handelt. Dieses wird auch als röntgenamorpher Belit bezeichnet. Diese kryptokristallinen Kristalle sind wiederum durch Eisenwüstit (Fe-W) umgeben, welches nicht-reaktiv sind.

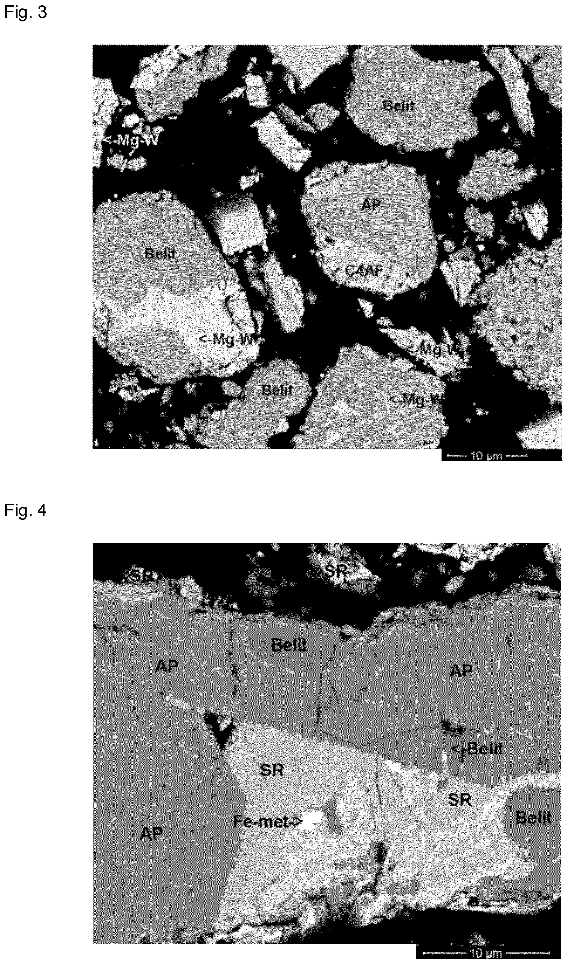

In den Figuren 3 und 4 ist nun wiederum jeweils eine rasterelektronenmikroskopische Aufnahme von LD-Schlacke dargestellt, die hier jedoch mittels einer LOESCHE-Mühle auf eine Feinheit von ca. 7000 gemahlen wurde.

Wie aus den Abbildungen ersichtlich, ist das Belit von umgebenden nicht-reaktiven Phasen getrennt worden, so dass es bei Wassereintritt aktiv zur Festigkeitsbildung beitragen kann. Demgegenüber kann insbesondere aus Fig. 4 gesehen werden, dass selbst bei einer derart feinen Aufmahlung die kryptokristalline Belitphase, welche weiter als AP gekennzeichnet ist, immer noch von nicht-reaktiven Phasen umgeben ist und ein Freilegen der kryptokristallinen Belitphase nicht möglich war.

Aus der Erkenntnis, dass es sich zum einen nicht um eine Glasphase, sondern um eine kryptokristalline Belitphase handelt und zum anderen, dass selbst bei einer Aufmahlung auf ca. 7.000 Blaine es nicht möglich ist, auch die kryptokristallinen Kristalle freizulegen, wurde entsprechend der Erfindung erkannt, dass bei einer langsamen Abkühlung das Kristallwachstum angeregt wird und aus den kryptokristallinen Kristallen eine normale Belitstruktur entsteht. Dies hat zur Folge, dass bei einer Aufmahlung ein höherer M.-%-Anteil von Belit vorhanden ist und gleichzeitig freigelegt werden kann, so dass die gemahlene entsprechend der Erfindung abgekühlte LD-Schlacke reaktiver ist als herkömmliche LD-Schlacke.

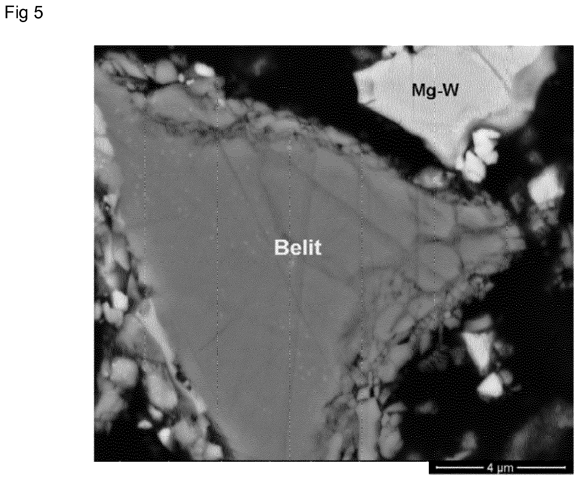

Ein Vorteil der Verwendung einer Vertikalwälzmühle, insbesondere einer LOESCHE-Mühle, ist in Fig. 5 gezeigt. Diese Figur stellt ebenfalls eine rasterelektronenmikroskopische Aufnahme einer gemahlenen LD-Schlacke dar. Hierbei ist aus dem Randbereich des Belit sowie durch die vorhandenen Anrisse sichtbar, dass nicht nur die Oberfläche beim Wassereintritt mit Wasser in Verbindung kommt, sondern das Wasser auch tiefer in den Kristall eindringen kann. Dies hat wiederum eine deutlich schnellere und intensivere Reaktion zur Folge. Ein derartiges Erzeugen von Rissen in den Belitkristallen sowie an deren Rand wird insbesondere bei der Verwendung einer Vertikalwälzmühle des LOESCHE-Typs zur Zerkleinerung erreicht.

Somit ist es mit dem erfindungsgemäßen Verfahren möglich, LD-Schlacken für eine Verwendung als Kompositstoff in der Zementindustrie in energieeffizienter Weise aufzubereiten.

## Patentansprüche

1. Verfahren zum Aufbereiten und Aktivieren von Stahlwerksschlacken, vorzugsweise von LD-Schlacke, als hydraulischer Kompositstoffe für die Zementindustrie,
   **dadurch gekennzeichnet,**
   **dass** flüssige Stahlwerksschlacken abgekühlt werden, wobei sie frühestens in vier Stunden zum Erstarren gebracht werden,
   **dass** in den erstarrten Stahlwerksschlacken mindestens 30 M.-% mineralische kristalline Belitphase vorhanden ist,
   **dass** die erstarrten Stahlwerksschlacken auf eine Feinheit von mindestens 5.500 Blaine bis 7.000 Blaine zerkleinert werden, wobei die Kristalle der Belitphase von sie umgebenden nicht-reaktiven Phasen freigelegt werden, und
   **dass** die zerkleinerten Stahlwerksschlacken einer Verwendung als hydraulischer Kompositstoff für die Zementindustrie zugeführt werden.

2. Verfahren nach Anspruch 1,
   **dadurch gekennzeichnet,**
   **dass** die erstarrten Stahlwerksschlacken weniger als 20 M.-% röntgenamorphe Anteile nach Rietveld aufweisen.

**3.** Verfahren nach Anspruch 2,
**dadurch gekennzeichnet,**
**dass** es sich bei den röntgenamorphen Anteilen um kryptokristallines Belit handelt.

**4.** Verfahren nach einem der Ansprüche 1 bis 3,
**dadurch gekennzeichnet,**
**dass** die flüssigen Stahlwerksschlacken einen Kalkstandard II zwischen 50 und 80 aufweisen.

**5.** Verfahren nach einem der Ansprüche 1 bis 4,
**dadurch gekennzeichnet,**
**dass** die flüssigen Stahlwerksschlacken zwischen 1.400°C und 1.450°C zum Erstarren gebracht werden.

**6.** Verfahren nach einem der Ansprüche 1 bis 5,
**dadurch gekennzeichnet,**
**dass** die flüssige Stahlwerksschlacken vor dem Abkühlen eine Temperatur im Bereich von 1.600°C bis 1.700°C, bevorzugt 1.620°C bis 1.650°C aufweisen.

**7.** Verfahren nach einem der Ansprüche 1 bis 6,
**dadurch gekennzeichnet,**
**dass** die zerkleinerten Stahlwerksschlacken der Verwendung als hydraulischer Kompositstoff für die Zementindustrie direkt nach dem Mahlen ohne weitere Sichtung zugeführt werden.

**8.** Verfahren nach einem der Ansprüche 1 bis 6,
**dadurch gekennzeichnet,**
**dass** aus den zerkleinerten Stahlwerksschlacken vor dem Zuführen der Verwendung als hydraulischer Kompositstofffür die Zementindustrie Feinstkorn mit einer Feinheit von mehr als 8.500 Blaine abgetrennt wird.

**9.** Verfahren nach einem der Ansprüche 1 bis 8,
**dadurch gekennzeichnet,**
**dass** die flüssigen Stahlwerksschlacken in Beeten mit einer Schichtdicke von mindestens 90 cm abgekühlt werden.

**10.** Verfahren nach einem der Ansprüche 1 bis 9,
**dadurch gekennzeichnet,**
**dass** die erstarrten Stahlwerksschlacken in einer Mühle-Sichter-Kombination zerkleinert werden.

**11.** Verfahren nach Anspruch 10,
**dadurch gekennzeichnet,**
**dass** als Mühle eine Vertikalwälzmühle, insbesondere des Loesche-Types, verwendet wird.

**Claims**

**1.** Method for processing and activating steelworks slags, preferably LD slags, as hydraulic composite materials for the cement industry,
**characterized in that**
fluid steelworks slags are cooled, wherein they solidify at the earliest after four hours,
at least 30 mass percent mineral crystalline belite phase is present in the solidified steelworks slags,
the solidified steelworks slags are communited to a fineness of from at least 5,500 Blaine to 7,000 Blaine, wherein the crystals of the belite phase are freed from the non-reactive phases surrounding them, and
the communited steelworks slags are fed to a use as hydraulic composite material for the cement industry.

**2.** Method according to claim 1,
**characterized in that**
the solidified steelworks slags comprise less than 20 mass percent X-ray amorphous fractions pursuant to Rietveld.

**3.** Method according to claim 2,
**characterized in that**
the X-ray amorphous fractions are cryptocrystalline belite.

**4.** Method according to any of claims 1 to 3,
**characterized in that**
the fluid steelworks slags have a LSFII (Lime Saturation Factor II) of between 50 and 80.

**5.** Method according to any of claims 1 to 4,
**characterized in that**
the fluid steelworks slags are solidify at between 1,400°C and 1,450°C.

**6.** Method according to any of claims 1 to 5,
**characterized in that**
the fluid steelworks slags are at a temperature in the range of from 1,600°C to 1,700°C, preferably 1,620°C to 1,650°C, prior to cooling.

**7.** Method according to any of claims 1 to 6,
**characterized in that**
the ground steelworks slags are fed to the use as a hydraulic composite material for the cement industry directly after grinding, without further classification.

**8.** Method according to any of claims 1 to 6,
**characterized in that**
ultrafine grains having a fineness of more than 8,500 Blaine are separated out of the comminuted steelworks slags prior to the feeding of the use as a hydraulic composite material for the cement industry.

**9.** Method according to any of claims 1 to 8,
**characterized in that**
the fluid steelworks slags are cooled in patches, at a layer thickness of at least 90 cm.

**10.** Method according to any of claims 1 to 9,
**characterized in that**
the solidified steelworks slags are comminuted in a mill-classifier combination.

**11.** Method according to claim 10,
**characterized in that**
a vertical roller mill, in particular of the LOESCHE type, is used as mill.

## Revendications

**1.** Procédé pour préparer et activer des laitiers d'aciérie, de préférence du laitier de conversion, sous forme de matériaux composites hydrauliques pour l'industrie cimentière, **caractérisé**
**en ce que** les laitiers d'aciérie fluides sont refroidis et sont solidifiés en quatre heures minimum,
**en ce qu'**au moins 30% en masse de phase bélite cristalline minérale sont présents dans les laitiers d'aciérie solidifiés,
**en ce que** les laitiers d'aciéries solidifiés sont concassés à une finesse d'au moins 5.500 Blaine à 7.000 Blaine, les cristaux de la phase bélite étant libérés des phases non réactives avoisinantes et
**en ce que** les laitiers d'aciérie concassés sont utilisés comme matériau composite hydraulique pour l'industrie cimentière.

**2.** Procédé selon la revendication 1, **caractérisé**
**en ce que** les laitiers d'aciérie solidifiés présentent, selon la méthode Rietveld, moins de 20% en masse de particules amorphes aux rayons X.

**3.** Procédé selon la revendication 2, **caractérisé**
**en ce que** les particules amorphes aux rayons X sont de la bélite cryptocristalline.

**4.** Procédé selon une des revendications 1 à 3, **caractérisé**
**en ce que** les laitiers d'aciérie fluides présentent un standard de chaux II situé entre 50 et 80.

**5.** Procédé selon une des revendications 1 à 4, **caractérisé en ce que** les laitiers d'aciérie fluides sont solidifiés entre 1.400°C et 1.450°C.

**6.** Procédé selon une des revendications 1 à 5, **caractérisé en ce que** les laitiers d'aciérie fluides présentent avant le refroidissement une température située sur la plage de 1.600°C à 1.700°C, de préférence de 1.620°C à 1.650°C.

**7.** Procédé selon une des revendications 1 à 6, **caractérisé en ce que** les laitiers d'aciérie concassés sont utilisés comme matériau composite hydraulique pour l'industrie cimentière directement après le broyage sans tri supplémentaire.

**8.** Procédé selon une des revendications 1 à 6, **caractérisé en ce qu'**avant l'utilisation comme matériau composite hydraulique pour l'industrie cimentière, les particules fines d'une finesse supérieure à 8.500 Blaine sont éliminées des laitiers d'aciérie concassés.

**9.** Procédé selon une des revendications 1 à 8, **caractérisé en ce que** les laitiers d'aciérie fluides sont refroidis dans des lits d'une épaisseur de couche d'au moins 90 cm.

**10.** Procédé selon une des revendications 1 à 9, **caractérisé en ce que** les laitiers d'aciérie solidifiés sont concassés dans une installation combinant broyeur et crible.

**11.** Procédé selon la revendication 10, **caractérisé en ce qu'**un broyeur à rouleaux verticaux, en particulier du type Loesche, est utilisé comme broyeur.

Fig. 1

Fig. 2

Fig. 3

Fig. 4

Fig 5

**EP 3 315 471 B1**

**IN DER BESCHREIBUNG AUFGEFÜHRTE DOKUMENTE**

**In der Beschreibung aufgeführte Patentdokumente**

- WO 2014037020 A1
- EP 2843063 A1
- EP 2015066348 W